# EUROPÄISCHE PATENTANMELDUNG

(11) **EP 2 116 701 A1**
(43) Veröffentlichungstag der Anmeldung: **11.11.2009**
(21) Anmeldenummer: 09156234.8
(22) Anmeldetag: 26.03.2009
(51) Int. Cl.: F01N 3/20

(54) **Vorrichtung zur Bereitstellung von Reduktionsmittellösung in ein Abgassystem und entsprechendes Abgassystem**

(30) Priorität: 07.05.2008 DE 102008022517
(71) Anmelder: Emitec Gesellschaft für Emissionstechnologie mbH, 53797 Lohmar (DE)
(72) Erfinder: Hodgson, Jan, 53840 Troisdorf (DE); Brück, Rolf, 51429 Bergisch Gladbach (DE)
(74) Vertreter: Rössler, Matthias

(57) **Zusammenfassung**

Die erfindungsgemäße Vorrichtung (1) zur Bereitstellung von Reduktionsmittellösung (2) in ein Abgassystem (3), umfassend ein Reservoir (7) für Reduktionsmittellösung (2) und ein Fördermittel (8), mit dem Reduktionsmittellösung (2) von dem Reservoir (7) zu einer Reduktionsmitteleinspeisung (9, 12) förderbar ist, zeichnet sich dadurch aus, dass die zu überwindende Förderhöhe (11) zwischen Reservoir (7) und Reduktionsmitteleinspeisung (9, 12) weniger als 1,5 Meter beträgt, wobei das Fördermittel (8) eine Membranpumpe (14) umfasst.

Die erfindungsgemäße Vorrichtung (1) erlaubt in vorteilhafter Weise die dosierte Zugabe von Reduktionsmittellösung (2) in ein Abgassystem (3) einer Verbrennungskraftmaschine, unabhängig von den anliegenden Randbedingungen, insbesondere unabhängig von der Lage der Vorrichtung (1), die beispielsweise durch eine Lage eines entsprechenden Automobils beeinflusst wird. Insbesondere kann so auch bei der Bewältigung von Gefällen mit dem Automobil oder Kraftfahrzeug eine sichere Zugabe von Reduktionsmittellösung (2) in das Abgassystem (3) gewährleistet werden.

## Beschreibung

Gegenstand der vorliegenden Erfindung ist eine Vorrichtung zur Bereitstellung von Reduktionsmittellösung in das Abgassystem einer Verbrennungskraftmaschine, ein entsprechendes Abgassystem sowie die Verwendung einer entsprechenden Vorrichtung in einem Abgassystem. Bevorzugtes Anwendungsgebiet der vorliegenden Erfindung ist die Bereitstellung von Harnstoff-Wasser-Lösung im Abgassystem von mobilen Verbrennungskraftmaschinen wie beispielsweise Automobilen.

Zur Reduktion der Stickoxide sind mit den sich in vielen Ländern der Welt ständig verschärfenden Abgasnormen zusätzliche Maßnahmen zur Reduktion des Stickoxidanteils im Abgas notwendig. Eine solche Möglichkeit besteht in der selektiven katalytischen Reduktion der Stickoxide (selective catalytic reduction, SCR), bei der ein Reduktionsmittel in das Abgas eingegeben wird, welches selektiv Stickoxide (NO_{X}) zu Stickstoff reduziert. Ein mögliches Reduktionsmittel ist Ammoniak. Üblicherweise wird Ammoniak nicht in reiner Form insbesondere an Bord von Automobilen gelagert, sondern in Form eines sogenannten Ammoniakvorläufers. Beispielsweise sind am Markt Harnstoff-Wasser-Lösungen erhältlich, die beispielsweise unter dem Markenname AdBlue oder Denoxium vertrieben werden und in dem Automobil in einem zusätzlichen Tank mitgeführt und dann je nach Gehalt der Stickoxide im Abgas diesem zugegeben wird.

Für die Funktionsfähigkeit und die Effizienz der selektiven katalytischen Reduktion ist es erforderlich, dass unabhängig von den Bedingungen des Betriebes des Kraftfahrzeuges, insbesondere unabhängig von der Lage des Kraftfahrzeuges, die entsprechende Reduktionsmittellösung zuverlässig zugeführt werden kann. Gleichzeitig muss dabei gewährleistet bleiben, dass der Tank, in dem die Reduktionsmittellösung vorgehalten wird, einfach zum Betanken erreichbar ist.

Hiervon ausgehend liegt der vorliegenden Erfindung die Aufgabe zugrunde, eine Vorrichtung zur Bereitstellung einer Reduktionsmittellösung anzugeben, die die aus dem Stand der Technik bekannten Probleme zumindest lindert und insbesondere eine lageunabhängige zuverlässige Bereitstellung von Reduktionsmittellösung zum Abgassystem gewährleistet, wobei insbesondere gleichzeitig auch eine leichte Zugänglichkeit der entsprechenden Reservoire gegeben sein soll. Weiterhin soll ein entsprechendes Abgassystem angegeben werden.

Diese Aufgaben werden gelöst durch die Merkmale der unabhängigen Ansprüche. Gegenstand der jeweiligen abhängigen Ansprüche sind vorteilhafte Weiterbildungen.

Die erfindungsgemäße Vorrichtung zur Bereitstellung von Reduktionsmittellösung in ein Abgassystem, insbesondere einer Verbrennungskraftmaschine, umfasst ein Reservoir für Reduktionsmittellösung und ein Fördermittel, mit dem Reduktionsmittellösung von dem Reservoir zu einer Reduktionsmitteleinspeisung förderbar ist. Erfindungsgemäß beträgt die zu überwindende Förderhöhe zwischen Reservoir und Reduktionsmitteleinspeisung weniger als 1,5 m, wobei das Fördermittel eine Membranpumpe umfasst.

Unter dem Begriff Reduktionsmittellösung wird hier eine Lösung eines selektiv auf Stickoxide wirkenden Reduktionsmittels oder dessen Vorläufer, insbesondere eine wässrige Lösung von zumindest Harnstoff, verstanden. Unter einem Abgassystem wird insbesondere ein Abgassystem, umfassend einen SCR-Katalysator, und weiterhin bevorzugt einen stromaufwärts des SCR-Katalysators liegenden Hydrolysekatalysator, verstanden. Unter einer Reduktionsmitteleinspeisung wird ein Mittel zur Einspeisung der Reduktionsmittellösung in das Abgassystem verstanden, insbesondere in Form von Tropfen oder eines Strahles. Die Reduktionsmitteleinspeisung kann insbesondere intermittierend oder pulsartig betreibbar sein.

Unter einer Membranpumpe wird eine Pumpe verstanden, bei der das zu fördernde Medium durch eine Membran vom Antrieb der Pumpe getrennt ist. Die Förderung erfolgt durch eine Verformung der Membran. Der Antrieb der Membran kann bevorzugt mechanisch oder hydraulisch erfolgen. Die Membran ist elastisch verformbar und ist bevorzugt aus Metall und/oder Kunststoff ausgebildet. Der Einsatz einer Membranpumpe als Fördermittel ist vorteilhaft, da dadurch vermieden werden kann, dass der Pumpenantrieb mit der Reduktionsmittellösung und insbesondere Harnstoff-Wasser-Lösung in Kontakt kommen kann. Diese kann auskristallisieren und je nach Temperatur können Reaktionen ablaufen, die zu Ablagerungen führen. Durch die Membran erfolgt in vorteilhafter Weise ein Schutz des Pumpenantriebs von diesen Effekten.

Reservoir, Fördermittel und Reduktionsmitteleinspeisung sind bevorzugt durch eine entsprechende Leitung verbunden. Unter dem Begriff Förderhöhe wird der insgesamt zu überwindende Niveauunterschied zwischen dem tiefsten Punkt des Reservoirs und der Reduktionsmitteleinspeisung verstanden. Insbesondere ist die Förderhöhe erfindungsgemäß auch so gewählt, dass selbst bei üblichen Steigungen, auf denen ein entsprechendes Automobil sich gerade befindet, eine zuverlässige Dosierung der Reduktionsmittellösung gewährleistet ist. Trotzdem besteht die Möglichkeit, das Reservoir so zu positionieren, dass es noch einfach von außen zugänglich und somit leicht betankbar ist.

Die erfindungsgemäße Vorrichtung kann insbesondere in Abgassystemen von Verbrennungskraftmaschinen, bevorzugt von Dieselkraftmaschinen eingesetzt werden.

Gemäß einer vorteilhaften Ausgestaltung der erfindungsgemäßen Vorrichtung sind Reduktionsmitteleinspeisung und Fördermittel so ausgebildet, dass zwischen ihnen ein geometrischer Abstand von mindestens 300 mm (Millimetern) besteht.

Dieser Mindestabstand gewährleistet, dass es nicht zu einer thermischen Schädigung des Fördermittels durch die Abwärme des Abgassystems kommt, da die Reduktionsmitteleinspeisung in Kontakt mit dem Abgassystem ausgebildet ist, um Reduktionsmittellösung in das Abgassystem einspeisen zu können. Bevorzugt beträgt der geometrische Abstand sogar mindestens 400 mm.

Gemäß einer weiteren vorteilhaften Ausgestaltung der erfindungsgemäßen Vorrichtung umfasst das Fördermittel eine Pumpe, insbesondere eine Magnetpumpe.

Das Fördermittel als Pumpe ist so zu verstehen, dass es sich nicht um eine Dosierpumpe, sondern um eine Förderpumpe handelt, mit der ein Druck an der Reduktionsmitteleinspeisung vorgebbar ist. Unter einer Magnetpumpe wird insbesondere eine Pumpe verstanden, bei der die Bewegung der entsprechenden Pumpenteile über eine magnetische Kupplung erfolgt.

Gemäß einer weiteren vorteilhaften Ausgestaltung der erfindungsgemäßen Vorrichtung weist die Membranpumpe einen hydraulischen Membranantrieb auf. Bevorzugt umfasst der hydraulische Membranantrieb magnetisch bewegliche Bauteile.

Der Einsatz eines hydraulischen Membranantriebes kann vorteilhaft einfach gesteuert werden und erlaubt insbesondere eine sehr genaue Dosierung der Pumpenleistung, da verschiedene Membranstellungen einfach und präzise angesteuert werden können. Der Einsatz eines hydraulischen Membranantriebes, welcher magnetisch bewegliche Bauteile umfasst, ist vorteilhaft, da hier im Wesentlichen verschleiß arm eine Übertragung der entsprechenden Kräfte erfolgen kann.

Gemäß einer weiteren vorteilhaften Ausgestaltung der erfindungsgemäßen Vorrichtung umfasst die Reduktionsmitteleinspeisung eine Düse.

Mittels einer als Düse ausgebildeten Reduktionsmitteleinspeisung ist in vorteilhafter Weise ein feines Zerstäuben der Reduktionsmittellösung beim Eintritt in das Abgassystem möglich. Dies führt zu einer verbesserten Verdampfung und Umsetzung der Reduktionsmittellösung, da für die Verdampfung eine größere Oberfläche zur Verfügung steht.

Gemäß einer weiteren vorteilhaften Ausgestaltung umfasst die Reduktionsmitteleinspeisung ein Ventil.

Hier erfolgt die Dosierung der entsprechenden Menge auf einfache Art und Weise durch Vorhalten eines Druckes vor der Reduktionsmitteleinspeisung und Öffnung des entsprechenden Ventil, wobei die zu dosierende Menge Reduktionsmittellösung durch den durch das Ventil freigegebenen durchströmbaren Querschnitt und die Öffnungsdauer des Ventils dosiert werden kann. Vorteilhaft kann in diesem Zusammenhang auch eine Rückleitung von der Reduktionsmitteleinspeisung zum Reservoir und/oder zum Fördermittel ausgebildet sein.

Gemäß einer weiteren vorteilhaften Ausgestaltung der erfindungsgemäßen Vorrichtung umfasst die Reduktionsmittellösung eine wässrige Lösung zumindest von Harnstoff.

Hierunter wird insbesondere eine Lösung verstanden, wie sie unter dem Markennamen AdBlue oder Denoxium vertrieben wird, wobei neben Harnstoff weitere Stoffe in wässriger Lösung vorhanden sein können, die beispielsweise den Gefrierpunkt der Harnstoff-Wasser-Lösung erniedrigende Zusätze, wie beispielsweise Ammoniumformiat, enthalten können. Dies bedeutet, dass die entsprechenden mit der Reduktionsmittellösung in Kontakt kommenden Teile, insbesondere Wände, der erfindungsgemäßen Vorrichtung so ausgestaltet sind, dass sie nicht durch die Harnstoff-Wasser-Lösung korrodiert werden. Bevorzugt ist eine Ausgestaltung, bei der die Kontaktbereiche zumindest teilweise aus einem Chrom und Nickel umfassenden Metall bestehen. Bevorzugt sind hierbei als Materialien Stähle mit einem Chromanteil von mindestens 17 Gew.-% (Gewichtsprozent) und einem Nickelanteil von mindestens 10 Gew.-%. Bevorzugt weist der Stahl Beimischungen von Titan, Niob und/oder Molybdän auf. Der Molybdänanteil liegt insbesondere bei mindestens 2 Gew.-%. Besonders bevorzugt ist der Einsatz von Stählen mit den folgenden Werkstoffnummern nach DIN EN 10088 1.4301, 1.4306, 1.4311, 1.4541, 1.4550, 1.4401, 1.4404, 1.4571, 1.4429, 1.4435, 1.4426, 1.4439.

Weiterhin wird ein Abgassystem vorgeschlagen, welches eine Vorrichtung zur Bereitstellung von Reduktionsmittel gemäß der vorliegenden Erfindung umfasst, bei dem die Reduktionsmitteleinspeisung stromaufwärts eines Hydrolysekatalysators und stromaufwärts eines SCR-Katalysators ausgebildet ist.

Insbesondere ist auch der Hydrolysekatalysator stromaufwärts des SCR-Katalysators ausgebildet. Die Harnstoff-Wasser-Lösung wird stromaufwärts des Hydrolysekatalysators in das Abgassystem eingebracht, wobei es bei Auftreffen auf den Hydrolysekatalysator zu einer Hydrolysereaktion des Harnstoffs zu Ammoniak kommt. Gegebenenfalls kann je nach Temperatur im Abgassystem vor Auftreffen auf den Hydrolysekatalysator auch eine Thermolyse zu Ammoniak und Isocyansäure erfolgen, wobei dann die Isocyansäure weiter auf den Hydrolysekatalysator zu Ammoniak umgesetzt wird. Bevorzugt ist der Hydrolysekatalysator so ausgestaltet, dass auch bei der maximal möglichen Zugabe von Reduktionsmittellösung eine im Wesentlichen vollständige Umsetzung zu Ammoniak erfolgt. Bevorzugt werden mehr als 98 Gewichts-% des Harnstoffs zu Ammoniak umgesetzt.

Gemäß einem weiteren Aspekt der vorliegenden Erfindung wird die Verwendung einer erfindungsgemäßen Vorrichtung zur Bereitstellung von Reduktionsmittellösung im Abgassystem einer mobilen Verbrennungskraftmaschine vorgeschlagen.

Insbesondere bei mobilen Verbrennungskraftmaschinen, wie beispielsweise bei Kraftfahrzeugen, insbesondere Personenkraftwagen und Lastkraftwagen, ist der zur Verfügung stehende Bauraum begrenzt, so dass üblicherweise nur recht kleine Pumpen als Fördermittel eingebaut werden können. Hier hilft der Einsatz einer erfindungsgemäßen Vorrichtung durch die erfindungsgemäße Begrenzung der maximal nötigen Förderhöhe, ein auch bei extremen Gefällen zuverlässig dosierendes Dosiersystem für Reduktionsmittellösung zu schaffen.

Eine weitere Ausgestaltung der erfindungsgemäßen Verwendung sieht vor, dass die Reduktionsmittellösung eine wässrige Lösung zumindest von Harnstoff umfasst.

Weiterhin wird ein Nutzfahrzeug vorgeschlagen, welches ein erfindungsgemäßes Abgassystem und/oder eine erfindungsgemäße Vorrichtung zur Bereitstellung von Reduktionsmittellösung umfasst.

Unter einem Nutzfahrzeug werden hier insbesondere Lastkraftwagen, Gabelstapler, Baumaschinen, wie beispielsweise Bagger, Kräne, Raupen und/oder Radlader, sowie landwirtschaftliche Maschinen, wie beispielsweise Traktoren, Mähdrescher, Erntefahrzeuge und/oder Fahrzeuge zur Bodenbearbeitung verstanden.

Im Folgenden wird die Erfindung anhand der beigefügten Zeichnungen näher erläutert, ohne auf die dort gezeigten Ausführungsbeispiele und Details beschränkt zu sein. Es zeigen schematisch:
- Figur 1: ein erstes Ausführungsbeispiel einer erfindungsgemäßen Vorrichtung;
- Figur 2: ein zweites Ausführungsbeispiel einer erfindungsgemäßen Vorrichtung;
- Figur 3: ein drittes Ausführungsbeispiel einer erfindungsgemäßen Vorrichtung;
- Figur 4: ein Beispiel einer Membranpumpe zum Einsatz als Fördermittel in einer erfindungsgemäßen Vorrichtung; und
- Figur 5: ein zweites Beispiel einer Membranpumpe zum Einsatz als Fördermittel in einer erfindungsgemäßen Vorrichtung.

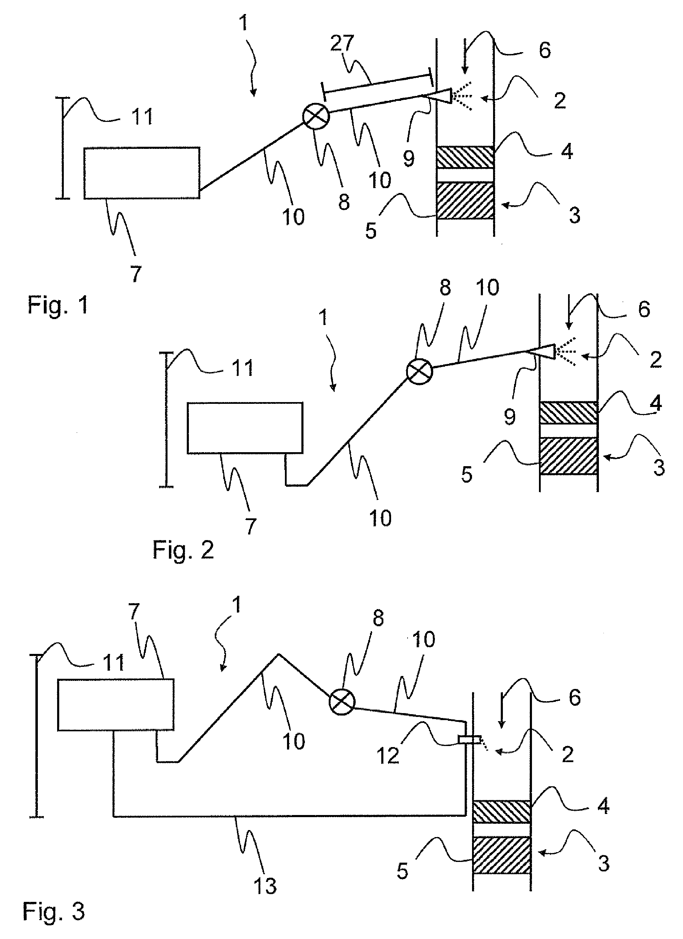

Figur 1 zeigt schematisch ein erstes Ausführungsbeispiel einer erfindungsgemäßen Vorrichtung 1 zur Bereitstellung von Reduktionsmittellösung 2 in ein Abgassystem 3 einer nicht gezeigten Verbrennungskraftmaschine. Die Reduktionsmittellösung 2 ist eine wässrige Lösung von zumindest Harnstoff. Das Abgassystem 3 ist Teil eines Kraftfahrzeugs, insbesondere eines Lastkraftwagens, insbesondere mit Diesel-Antrieb und weist einen Hydrolysekatalysator 4 und einen SCR-Katalysator 5 auf. Der Hydrolysekatalysator 4 liegt in einer Durchströmungsrichtung 6 des Abgases durch das Abgassystem 3 stromaufwärts des SCR-Katalysators 5.

Die Vorrichtung 1 umfasst ein Reservoir 7 für Harnstoff-Wasser-Lösung und ein Fördermittel 8. Mit dem Fördermittel 8 ist Reduktionsmittellösung 2 von dem Reservoir 7 zu einer in diesem Ausführungsbeispiel als Düse 9 ausgebildeten Reduktionsmitteleinspeisung förderbar. Das Fördermittel 8 umfasst erfindungsgemäß eine Membranpumpe. Mit der Düse 9 wird im Betrieb Reduktionsmittellösung 2 in das Abgassystem 3 eingedüst, bevorzugt in Form mehrerer oder einer Vielzahl von kleinen Tröpfchen. Die Düse 9 ist stromaufwärts des Hydrolysekatalysators 4 und stromaufwärts des SCR-Katalysators 5 ausgebildet. Reservoir 7, Pumpe 8 und Düse 9 sind über Leitungen 10 miteinander verbunden. Im Betrieb fördert das Fördermittel 8 Reduktionsmittellösung 7 durch die Leitung 10 zur Düse 9. Erfindungsgemäß beträgt die Förderhöhe 11 zwischen Reservoir 7 und Düse 9 weniger als 1,5 m, bevorzugt weniger als 1,0 m und insbesondere weniger als 0,5 m. Die Förderhöhe bestimmt sich als die insgesamt zu überwindende geodätische Höhe vom tiefsten Punkt des Reservoirs 7 oder der Leitung 10 zur Düse 9. Hierbei kann je nach Ausbildung der Vorrichtung 1 eine stufenweise Förderung erfolgen, das heißt, dass die Förderhöhe 11 aus verschiedenen Teilförderhöhen zusammensetzbar ist. Die Förderhöhe 11 ist dann als die Summe dieser Teilförderhöhen definiert.

Durch die Förderung der Reduktionsmittellösung 2 durch die Düse 9 wird Harnstoff-Wasser-Lösung auf den Hydrolysekatalysator 4 gegeben. Diese Harnstoff-Wasser-Lösung 2 verdampft entweder im Abgassystem 3 vor Auftreffen auf den Hydrolysekatalysator 4 oder auf diesem. Auf dem Hydrolysekatalysator 4 wird die Umsetzung zu Ammoniak katalysiert. Bevorzugt kann es zumindest teilweise zu einer Thermolyse kommen, bei der aus Harnstoff Isocyansäure und Ammoniak entsteht. Die Isocyansäure wird ebenfalls vom Hydrolysekatalysator 4 zu Ammoniak umgewandelt. Der geometrische Abstand 27 zwischen Düse 9 und Fördermittel 8 beträgt erfindungsgemäß mindestens 300 mm, um das Fördermittel 8 vor thermischen Schädigungen durch die Abwärme des Abgassystems 3 zu schützen.

Figur 2 zeigt schematisch ein zweites Ausführungsbeispiel einer erfindungsgemäßen Vorrichtung 1. Diese weist eine andere Führung der Leitungen 10 auf, so dass hier die Förderhöhe 11 anders definiert ist. Sie definiert sich als die Höhendifferenz des tiefsten Punktes der Leitung 10 im Vergleich zur Höhe der Düse 9.

Figur 3 zeigt schematisch ein drittes Ausführungsbeispiel einer erfindungsgemäßen Vorrichtung 1. Hier ist statt einer Düse ein Ventil 12 ausgebildet, mittels dem die Reduktionsmittellösung 2 zum Abgassystem 3 zugebbar ist. Das Ventil 12 stellt also eine Alternative einer Reduktionsmitteleinspeisung im Sinne der vorliegenden Erfindung dar. Das Ventil 12 ist über eine Rückleitung 13 mit dem Reservoir 7 verbunden, so dass eine Kreisförderung der Reduktionsmittellösung 2 erfolgt. Hierbei wird durch das Fördermittel 8 ein Druck aufgebaut und aufrecht erhalten, die Abmessung der zuzudosierenden Menge an Reduktionsmittellösung 2 wird über entsprechende Taktung und Öffnung des Ventils 12 erreicht. Die Förderhöhe 11, die erfindungsgemäß weniger als 1,5 m beträgt, berechnet sich hierbei über die Höhendifferenz des tiefsten Punktes der Rückleitung 13 zum höchsten Punkt der Leitung 10.

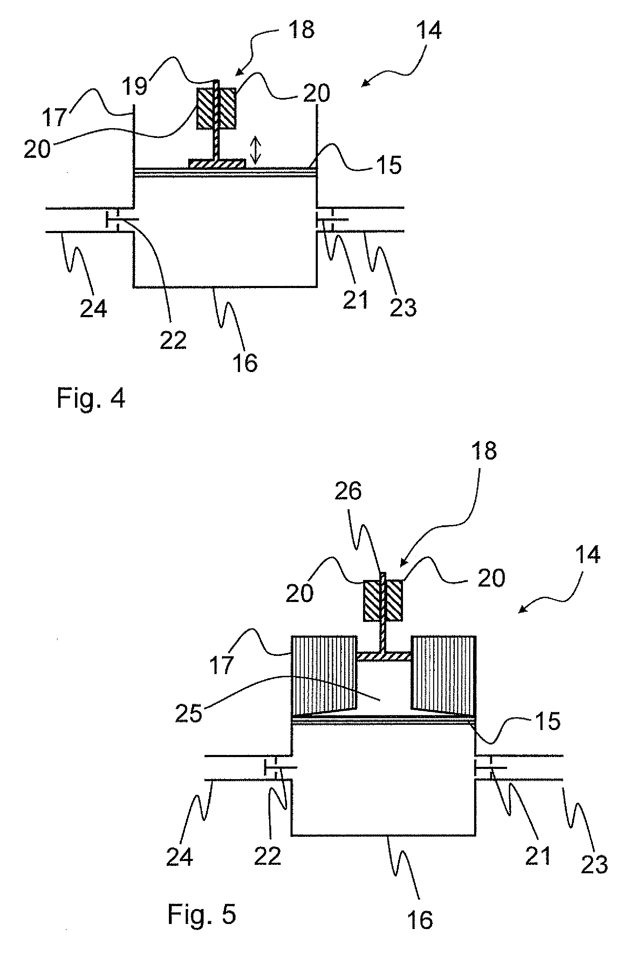

Figur 4 zeigt schematisch ein erstes Beispiel einer Membranpumpe 14 zum Einsatz als Fördermittel 8 in einer erfindungsgemäßen Vorrichtung 1. Die Membranpumpe 14 weist eine Membran 15 auf, die einen Förderraum 16 von einem Antriebsraum 17 trennt. Der Antriebsraum 17 umfasst einen Membranantrieb 18. Im Beispiel gemäß Figur 4 umfasst der Membranantrieb 18 einen Kolben 19, der durch einen Magnetantrieb 20 bewegbar ist. Der Magnetantrieb 20 umfasst hier nicht näher gezeigte mit einer nicht gezeigten Stromversorgung verbindbare Spulen, mittels derer eine Auf- und Abwärtsbewegung des Kolbens 19 je nach Betrieb der entsprechenden Spulen erreichbar ist. Durch den Magnetantrieb 20 ist der Kolben 19 gegen die Membran 15 pressbar, wodurch sich die Membran 15 verformt. Kolben 19 und Membran 15 sind miteinander verbunden, vorzugsweise fügetechnisch miteinander verbunden, so dass mittels des Kolbens 19 auch die Membran 15 aus dem Förderraum 16 hinaus verformt werden kann, in dem mittels des Kolbens 19 an der Membran 15 gezogen wird.

Durch eine entsprechende Auslenkung des Kolbens 19 können also verschiedene Verformungen der Membran 15 erreicht werden. Je nach Verformung der Membran und je nach Stellung eines Einlassventils 21 und eines Auslassventils 22 kann somit, je nachdem ob die Membran 15 in den Förderraum 16 hinein oder aus diesem heraus verformt wird, ein Fluid aus einer Einlassleitung 23 in eine Auslassleitung 24 gefördert werden.

Figur 5 zeigt ein weiteres Beispiel einer Membranpumpe 14, die als Fördermittel 8 in einer erfindungsgemäßen Vorrichtung 1 zum Einsatz kommen kann. Der Membranantrieb 18 ist im Unterschied zum ersten Beispiel nicht mechanisch, sondern hydraulisch ausgebildet. Oberhalb der Membran 15 ist der Antriebsraum 17 sich konisch erweiternd ausgebildet. Innerhalb des freien Raums ist eine Hydraulikflüssigkeit 25 ausgebildet. Mittels eines Förderkolbens 26 kann der Druck der Hydraulikflüssigkeit 25 variiert werden. Die Membran 15 wird dadurch entweder in den Förderraum 16 hinein oder aus diesem heraus verformt. Der Förderkolben 26 wird über einen Magnetantrieb 20 bewegt. Die Membran 15 ist bevorzugt aus einem Metall ausgebildet, kann jedoch grundsätzlich auch aus einem entsprechenden Kunststoff ausgebildet sein.

Die erfindungsgemäße Vorrichtung 1 erlaubt in vorteilhafter Weise die dosierte Zugabe von Reduktionsmittellösung 2 in ein Abgassystem 3 einer Verbrennungskraftmaschine, unabhängig von den anliegenden Randbedingungen, insbesondere unabhängig von der Lage der Vorrichtung 1, die beispielsweise durch eine Lage eines entsprechenden Automobils beeinflusst wird. Insbesondere kann so auch bei der Bewältigung von Gefällen mit dem Automobil oder Kraftfahrzeug eine sichere Zugabe von Reduktionsmittellösung 2 in das Abgassystem 3 gewährleistet werden.

### Bezugszeichenliste

- 1: Vorrichtung zur Bereitstellung von Reduktionsmittellösung
- 2: Reduktionsmittellösung
- 3: Abgassystem
- 4: Hydrolysekatalysator
- 5: SCR-Katalysator
- 6: Durchströmungsrichtung
- 7: Reservoir
- 8: Fördermittel
- 9: Düse
- 10: Leitung
- 11: Förderhöhe
- 12: Ventil
- 13: Rückleitung
- 14: Membranpumpe
- 15: Membran
- 16: Förderraum
- 17: Antriebsraum
- 18: Membranantrieb
- 19: Kolben
- 20: Magnetantrieb
- 21: Einlassventil
- 22: Auslassventil
- 23: Einlassleitung
- 24: Auslassleitung
- 25: Hydraulikflüssigkeit
- 26: Förderkolben
- 27: geometrischer Abstand

## Patentansprüche

1. Vorrichtung (1) zur Bereitstellung von Reduktionsmittellösung (2) in ein Abgassystem (3), umfassend ein Reservoir (7) für Reduktionsmittellösung (2) und ein Fördermittel (8), mit dem Reduktionsmittellösung (2) von dem Reservoir (7) zu einer Reduktionsmitteleinspeisung (9, 12) förderbar ist, **dadurch gekennzeichnet, dass** die zu überwindende Förderhöhe (11) zwischen Reservoir (7) und Reduktionsmitteleinspeisung (9, 12) weniger als 1,5 Meter beträgt, wobei das Fördermittel (8) eine Membranpumpe (14) umfasst.

2. Vorrichtung (1) nach Anspruch 1, bei dem zwischen Reduktionsmitteleinspeisung (9, 12) und Fördermittel (8) ein geometrischer Abstand (27) von mindestens 300 mm (Millimetern) besteht.

3. Vorrichtung (1) nach Anspruch 1 oder 2, bei dem das Fördermittel (8) eine Magnetpumpe (14) umfasst.

4. Vorrichtung (1) nach einem der vorhergehenden Ansprüche, bei dem die Membranpumpe (14) einen hydraulischen Membranantrieb (18) aufweist.

5. Vorrichtung (1) nach Anspruch 4, bei dem der hydraulische Membranantrieb (18) magnetisch bewegliche Bauteile (26) umfasst.

6. Vorrichtung (1) nach einem der vorhergehenden Ansprüche, bei dem die Reduktionsmitteleinspeisung eine Düse (9) umfasst.

7. Vorrichtung (1) nach einem der vorhergehenden Ansprüche, bei dem die Reduktionsmitteleinspeisung ein Ventil (12) umfasst.

8. Vorrichtung (1) nach einem der vorhergehenden Ansprüche, bei dem die Reduktionsmittellösung (2) eine wässrige Lösung zumindest von Harnstoff umfasst.

9. Abgassystem (3), umfassend eine Vorrichtung (1) zur Bereitstellung von Reduktionsmittellösung (2) nach einem der vorhergehenden Ansprüche, bei dem die Reduktionsmitteleinspeisung (9, 12) stromaufwärts eines Hydrolysekatalysators (4) und stromaufwärts eines SCR-Katalysators (5) ausgebildet ist.

10. Verwendung einer Vorrichtung (1) nach einem der Ansprüche 1 bis 8 zur Bereitstellung von Reduktionsmittellösung (2) im Abgassystem (3) einer mobilen Verbrennungskraftmaschine.

11. Verwendung nach Anspruch 10, bei der die Reduktionsmittellösung (2) eine wässrige Lösung zumindest von Harnstoff umfasst.

12. Nutzfahrzeug, umfassend ein Abgassystem nach Anspruch 9 und/oder eine Vorrichtung (1) nach einem der Ansprüche 1 bis 8.
